# EUROPEAN PATENT SPECIFICATION

(11) **EP 2 544 952 B1**
(45) Date of publication and mention of the grant of the patent: **16.07.2014**
(21) Application number: 11707669.5
(22) Date of filing: 09.03.2011
(51) Int. Cl.: B65C 9/04, B67B 3/20, H02K 11/00

(54) **ACTUATION MOTOR, PARTICULARLY FOR SUPPORTING PANS OR FOR WINDING SPINDLES ASSOCIATED WITH A LABELING MACHINE**
BETÄTIGUNGSMOTOR, IM BESONDEREN FÜR STÜTZWANNEN ODER WICKELSPINDELN FÜR EINE ETIKETTIERMASCHINE
MOTEUR D'ACTIONNEMENT, EN PARTICULIER POUR DES CUVETTES DE SUPPORT OU DES BROCHES À BOBINER ASSOCIÉS À UNE MACHINE À ÉTIQUETER

(30) Priority: 11.03.2010 IT VR20100044
(43) Date of publication of application: 16.01.2013
(73) Proprietor: Sacmi Verona S.P.A., 40026 Imola (BO) (IT)
(72) Inventor: PEDERCINI, Maurizio, I-46045 Marmirolo (IT); FABBRI, Damiano, I-46045 San Giorgio Di Mantova (IT); DI PINTO, Ivan, I-46045 Marmirolo (IT)
(74) Representative: Modiano, Micaela Nadia
(86) International application number: PCT/EP2011/053564
(87) International publication number: WO 2011/110606

(56) References cited:
- EP-A1- 1 174 345
- EP-A1- 1 864 910
- EP-A1- 1 864 911
- EP-A1- 1 873 066
- EP-A1- 2 174 874
- EP-A2- 1 251 074
- EP-B1- 1 751 008
- US-B1- 6 310 455

## Description

### Technical field

The present invention relates to an actuation motor, particularly for supporting pans or for winding spindles associated with a labeling machine.

### Background Art

With specific reference to labeling machines that have a carousel that supports, along the periphery thereof, a plurality of supporting pans which are angularly spaced around the axis of rotation of the carousel, a known practice is to rotate the pans supporting the containers to be labeled using electric motors which can be fixed to the structure of the carousel and arranged below the pan so that the axis of the motor coincides with the axis of rotation of the supporting pan in order to be able to bring the container arranged on the supporting pan into the angular positions required for correctly executing the labeling process.

EP 1596488 A2 in the name of KHS discloses a motor for actuating bottle-carrying pans along a rotary labeling machine, which has elements for connection between the drive shaft and the element to be actuated, which are arranged at least partially within the motor.

Specifically, the connection between drive shaft and pan is obtained with a male drive shaft that can be connected with a female-shaped element that can be integrally associated with the pan.

The electronic circuits for controlling the motor and the associated connectors are accommodated within a housing body which is arranged on the bottom of the motor, at the end opposite from the pan.

EP 1751008 B1 in the name of Krones discloses a motor, again designed to actuate bottle-carrying pans, of the rotating case type, i.e. with the stator fixed to the carousel and with the rotor arranged externally to the stator and rigidly connected to the pan.

Specifically, the body housing the electronic circuits for controlling the motor and the connectors is arranged below the rotor.

EP 1864911 A1 in the name of Sidel discloses a motor for actuating container-carrying pans which can be associated with a labeling machine in which, essentially, the pan is connected directly to the drive shaft by means of a coaxial connection.

In this case the body housing the electronic circuits for controlling the motor and the connectors is arranged laterally to the rotor with its axis of extension parallel to the axis of rotation of the motor and, in particular, longitudinally spaced from the position of the drive shaft.

Lastly, EP 1873066 A1, also in the name of Sidel and corresponding to the preamble of claim 1, discloses a motor for pans of rotary labeling machines, in particular of the type that allows the labeling of containers that are different from each other, for example non-cylindrical or with particular characteristics that require a particular positioning of the label.

In these machines there can be means of alignment (typically optical or mechanical) which make it possible to check, for example, the angular position of the containers positioned on the pans.

The motor described and claimed in the above mentioned patent application defines a through opening, substantially parallel to the drive shaft, which is adapted to allow means of alignment or centering to access the pan through the motor.

In this technical solution, the body housing the electronic circuits for controlling the motor and the connectors is arranged substantially in a similar position to that specified in EP 1864911 A1.

However, the solutions currently known and briefly described above, although widely used, are not without drawbacks.

Firstly, in many cases, an excessive encumbrance is noted, both laterally and longitudinally, of the motor, owing to the particular positioning of the body housing the electronic circuits for controlling the motor.

With regard to the electronic circuits for controlling the motor, in all the technical solutions offered up to now an excessive level of heating has been found, owing to their positioning in proximity to the stator.

Furthermore, with regard to the overall structure of the motors described above, there is a certain rigidity of application since they are designed to be capable of being used exclusively for actuating the bottle-carrying pans.

### Disclosure of the Invention

The aim of the present invention is to solve the above-mentioned problems and overcome the above-mentioned drawbacks, by providing an actuation motor, particularly for supporting pans or for winding spindles associated with a labeling machine, that is extremely compact and of flexible use.

Within this aim, an object of the present invention is to provide an actuation motor, particularly for supporting pans or for winding spindles associated with a labeling machine, that is designed in such a way as to appreciably limit overheating of the electronic circuits for controlling the motor.

Another object of the invention is to provide an actuation motor, particularly for supporting pans or for winding spindles associated with a labeling machine, which is capable of being associated with further actuation devices that can be moved in the axial direction and optionally decoupled from the rotational movement of the drive shaft.

Another object of the invention is to provide an actuation motor that is designed in such a way as to provide, optionally, a secondary drive takeoff.

This aim, as well as these and other objects which will become better evident hereinafter, are achieved by an actuation motor, particularly for supporting pans or for winding spindles associated with a labeling machine, as defined by claim 1.

### Brief description of the drawings

Further characteristics and advantages of the invention will become better apparent from the following detailed description of some preferred, but not exclusive, embodiments of an actuation motor, particularly for supporting pans or for winding spindles associated with a labeling machine, according to the invention, illustrated by way of non-limiting example in the accompanying drawings, wherein:

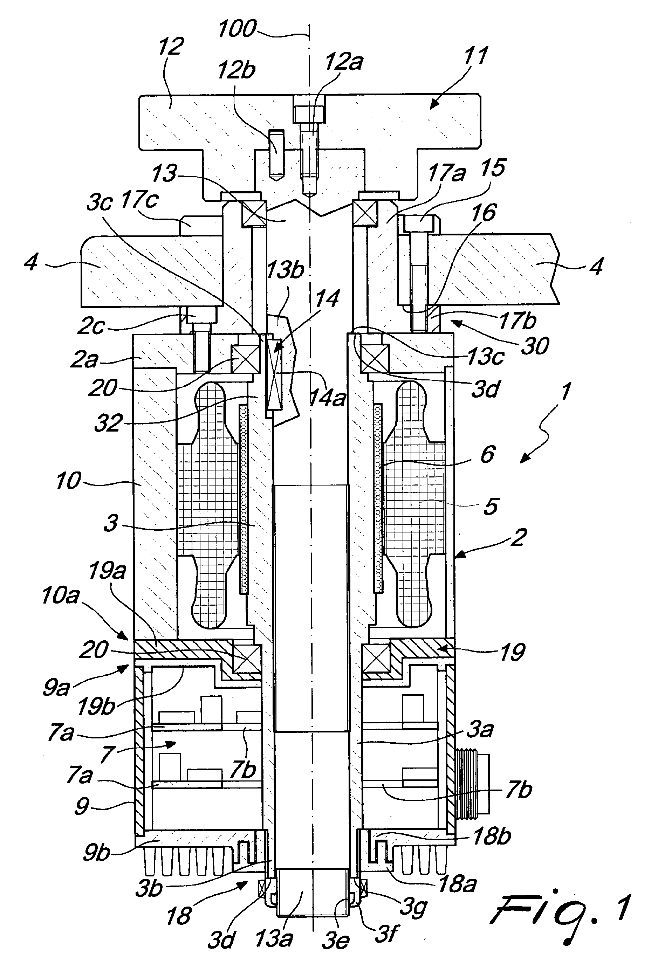

Figure 1 is a longitudinal cross-sectional view of the actuation motor according to the invention associated with a container-carrying pan of a labeling machine;
Figure 2 is a longitudinal cross-sectional view of the actuation motor according to the invention associated with a winding spindle;
Figures 3 and 4 are two longitudinal cross-sectional views of an actuation motor according to the invention associated with an ejector body in two different working conditions;
Figure 5 is a cross-sectional view taken along the plane identified by the line V-V of Figure 4;

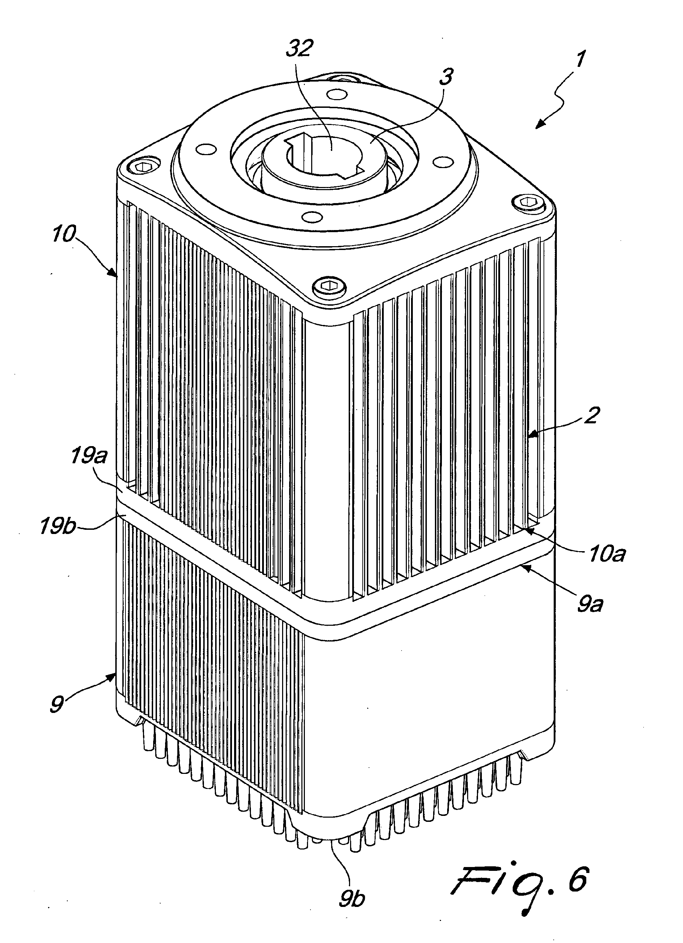

Figure 6 is a perspective view of an actuation motor according to the invention;

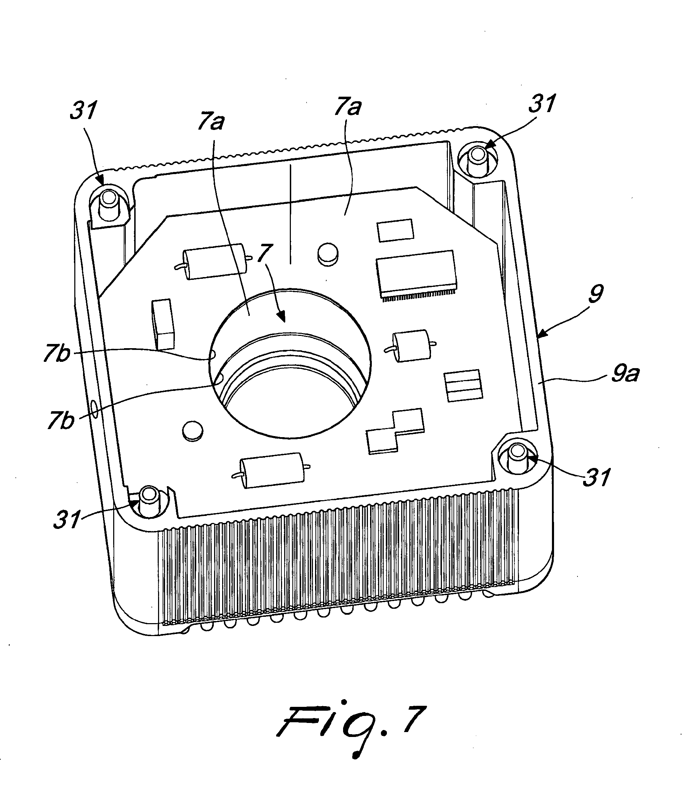

Figure 7 is a perspective view of the body for accommodating the electronic control device.

### Ways of carrying out the Invention

With reference to the figures, the present invention relates to an actuation motor, generally indicated with the reference numeral 1, particularly for supporting pans or for winding spindles associated with a labeling machine.

The actuation motor 1 comprises a containment casing 2 which supports rotatably a drive shaft 3 that can rotate about its own axis 100 and can be connected to a supporting pan 11 for containers to be labeled or to a winding spindle 21 onto which bands of film are to be wound in order to obtain sleeve-like labels to be transferred onto the containers to be labeled.

The containment casing 2 can be anchored, by way of connection means 30, to a supporting structure 4 associated with the labeling machine and, specifically, integral with the carousel.

According to the invention, the containment casing 2 accommodates a stator 5, the respective rotor 6 and an electronic device 7 for controlling the actuation motor 1.

In particular, the containment casing 2 forms an axial opening that is parallel to the axis of rotation 100 and which conveniently is a through opening, inside which the drive shaft 3 is supported rotatably, for example by means of interposed bearings 20 supported by the containment casing 2.

The axial opening passes longitudinally through a motor body 10 which accommodates the stator 5 and the rotor 6, as well as a body 9 for accommodating the electronic control device 7.

In more detail, there are means 31 for mutual interconnection between a first longitudinal end 9a of the accommodation body 9 and a respective connecting end 10a of the motor body 10.

Advantageously, the transverse dimensions of the accommodation body 9 substantially correspond to the transverse dimensions of the motor body 10.

According to a preferred embodiment, the drive shaft 3 is extended along the entire longitudinal extension of the axial opening.

According to a further distinctive characteristic of the present invention, the electronic control device 7 is arranged around a first longitudinal portion 3a of the drive shaft 3 which is arranged in a distal position with respect to the pan 11 or to the winding spindle 21.

Specifically, the electronic control device 7 can be constituted by one or more electronic boards 7a which lie, in use, on a respective plane of arrangement that is substantially perpendicular to the axis of rotation 100 of the drive shaft 3.

In particular, the electronic board or boards 7a have a respective passage 7b that is adapted to form part of the axial opening designed to be crossed by the drive shaft 3.

Conveniently, as inter alia shown in the figures, the drive shaft 3 comprises a hollow shaft 32.

The drive shaft 3, in particular, protrudes, with one of its ends 3b, from the bottom wall 9b of the accommodation body 9.

In this regard, there are means 18 for labyrinth-like mating between the end 3b of the drive shaft 3 and the peripheral edge of the bottom 9b of the accommodation body 9 that forms the through opening.

For the purposes of example, the means 18 for labyrinth-like mating can be constituted by a first labyrinth-like element 18a that is integral, for example by means of a male/female screw coupling, with the end 3b of the drive shaft 3, and a second labyrinth-like element 18b which is formed on the peripheral edge of the through opening defined on the bottom 9b of the accommodation body 9.

The first labyrinth-like element 18a has at least one protrusion alternated with a respective recess and coupled to a complementarily-shaped surface formed on the second labyrinth-like element 18b in such a way as to define a gap between them that is capable of ensuring an exchange of air between the inside and the outside of the accommodation body 9, thus preserving the sufficient level of protection from water and dust.

If the actuation motor 1 is being used for moving a supporting pan 11 for containers to be labeled, then the supporting pan 11 can be provided with a body or apparatus of the pan 12 that can be integrally associated, for example by means of threaded bodies 12a, with a shaft of the pan 13 that can be integrally associated with the drive shaft 3.

In order to make the body of the pan 12 integral in rotation with the shaft of the pan 13 there are conveniently one or more elements 12b for transmitting motion.

The shaft of the pan 13 is keyed internally to the hollow shaft 32 and, in particular, can be inserted in the hollow shaft 32 in order to protrude with its free end 13a arranged at the other end from that of the pan 11, at the end 3b of the drive shaft 3.

Between a region 3c of the hollow shaft 32 and an intermediate portion 13b of the shaft of the pan 13 there are means 14 for transmission of motion, constituted advantageously by a tab 14a, designed to render, in at least a first working condition, the shaft of the pan 13 integral with the drive shaft 3 in rotation about the axis of rotation 100 in order to consequently transfer the rotation movement of the hollow shaft 32 to the supporting pan 11.

For fixing the shaft of the pan 13 to the hollow shaft 32, there is nothing to prevent the use of a hollow shaft 32 with a grooved profile which is coupled, internally, with a correspondingly shaped shaft of the pan 13 as well as with keying means that are known per se.

Advantageously, in order to stably lock the shaft of the pan 13 to the hollow shaft 32, on the shaft of the pan 13 there can be a radial widening 13c providing an abutment portion designed to abut against an end 3d of the hollow shaft 32 which is directed towards the body of the pan 12.

In order to guarantee the locking of the abutment portion onto the end portion 3d, the end 3b of the hollow shaft 32 has a threading 3e which can be engaged by a tightening ferrule 3f that is designed to act, with a respective abutment surface 3g thereof, against the end portion 3d of the hollow shaft 32 so as to pull, when tightened, the shaft of the pan 13 and, consequently, bring the abutment portion formed by the radial widening 13c against the end portion 3d.

In any case, there is nothing to prevent having different methods of mechanical connection between the body or apparatus of the pan 12 and the drive shaft 3.

An interconnection element 19 which lies at right angles to the axis of rotation 100 of the drive shaft 3 can be positioned between the motor body 10 and the accommodation body 9.

Specifically, the interconnection element 19 comprises a first plate-like element 19a made of metallic material which is directed toward the motor body 10 and is adapted to favour the exchange of heat toward the outer surface of the motor body 10, and a second insulating element 19b (made for example from a plastic partition), which is directed toward the accommodation body 9 in order to thermally isolate the electronic control device 7 of the motor.

As mentioned previously, according to a preferred embodiment, there are means 30 of connection between the containment casing 2 and the supporting structure 4.

The connection means 30 comprise, for example, a tubular body 17a, which can be fitted over a portion of the shaft of the pan 13, and which has a flanged end 17b that can be fixed, for example by means of hex head screws 2c, to the head end 2a of the containment casing 2 which is arranged in proximity to the supporting pan 11.

The flanged end 17b is designed to provide a first abutment region 16 for a portion of the supporting structure 4.

The connection means 30 comprise, in addition, a tightening element 17c that is available on the opposite end of the supporting structure 4 from the first abutment region 16.

In order to allow the containment casing 2 to be fixed to the supporting structure 4, there are threaded connection bodies 15 which can be inserted through respective insertion holes defined on the flanged end 17b, on the tightening element 17c and passing through the supporting structure 4.

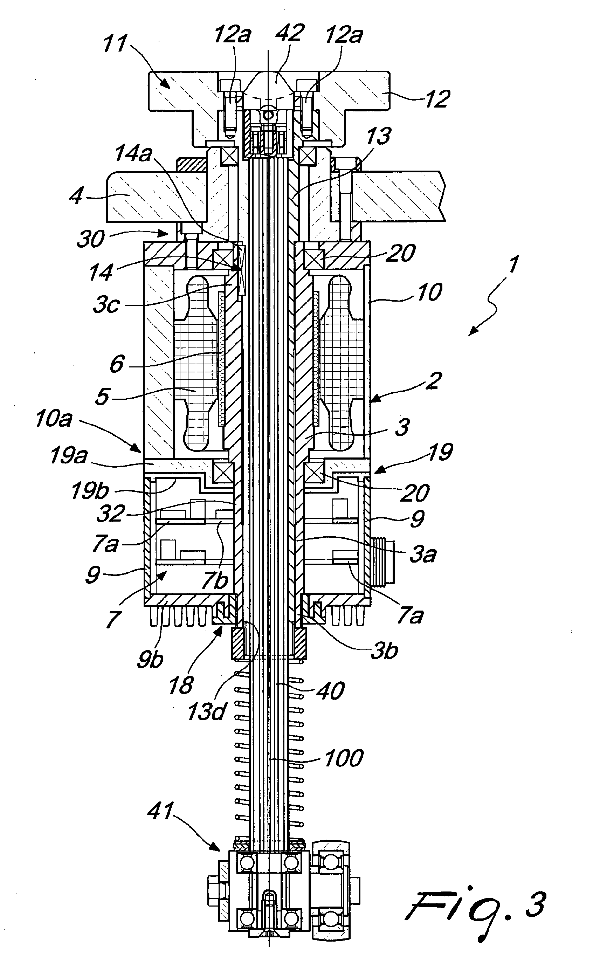

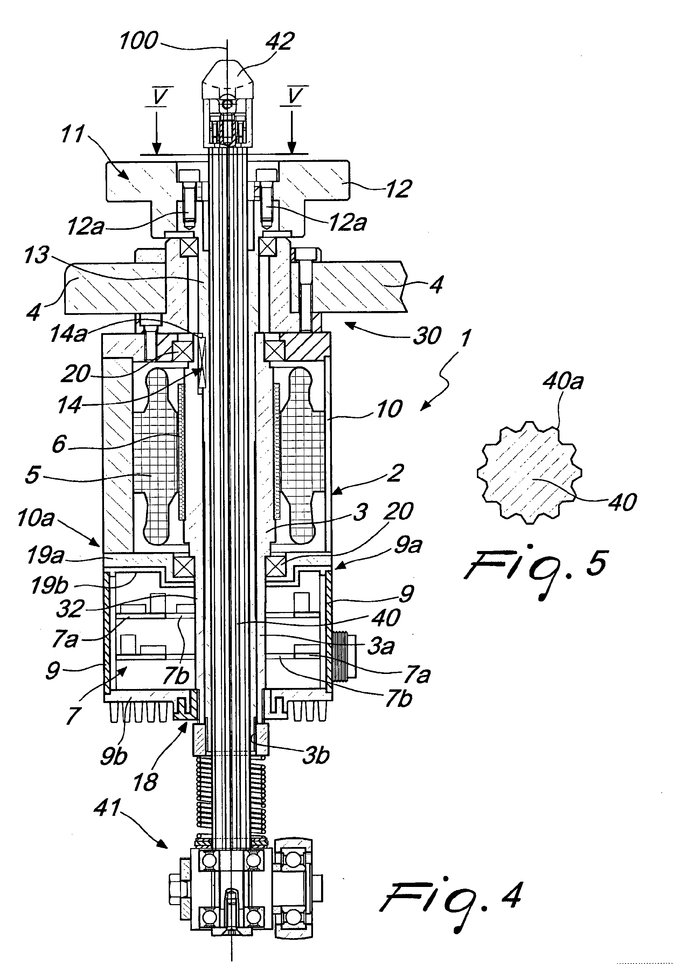

With reference to the embodiment shown in Figures 3 to 5, it is possible for the shaft of the pan 13 to have an internal grooved cavity 13d that can be slidingly engaged, along a direction that is parallel to the axis of rotation 100, by an elongated body 40 having a first command end 41, advantageously associated with a movement device, and a second operative end 42.

The elongated body 40 has an outer surface 40a which is complementary to the internal grooved cavity 13d so as to be dragged in rotation about the axis of rotation 100.

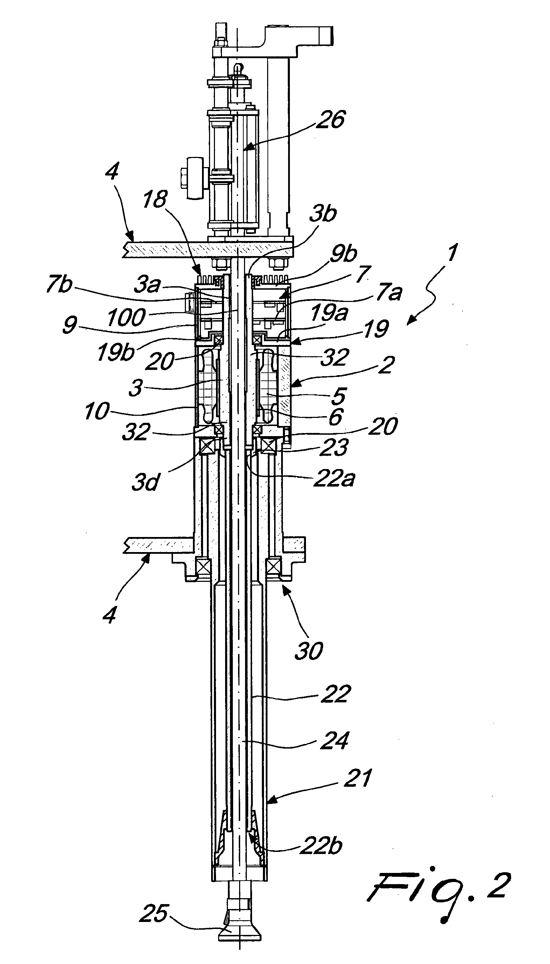

If, as shown in Figure 2, the actuation motor 1 is instead associated with a winding spindle 21, then such winding spindle can have a hollow actuation shaft 22 that can be connected, for example by means of a keying joint 23, at a first end portion 22a, to an end 3d of the hollow shaft 32.

In this specific case, there can be at least one rod 24 that passes through the hollow shaft 32 and the hollow actuation shaft 22 and which is designed to kinematically connect an actuation head 25, supported at the second end portion 22b of the hollow actuation shaft 22, with movement means 26.

In particular, the rod 24 can slide freely inside the hollow shaft 32 and inside the hollow actuation shaft 22 in order to move, on command, the actuation head 25 along a direction that is substantially parallel to the axis of rotation 100.

The operation of the actuation motor 1 according to the present invention is evident from the foregoing description.

All the characteristics of the invention, indicated above as advantageous, advisable or similar, may also be missing or be substituted by equivalent characteristics.

The individual characteristics set out in reference to general teachings or to specific embodiments may all be present in other embodiments or may substitute characteristics in such embodiments.

In practice it has been found that in all the embodiments the invention is capable of fully achieving the set aim and objects.

In particular, it has been found that the use of the actuation motor 1 is extremely flexible, adapting perfectly both to the movement of the pans and to the movement of the spindles.

Moreover, the use of electronic boards 7a which lie on planes of arrangement that are substantially perpendicular to the axis of rotation 100 of the drive shaft 3, and which define respective passages 7b for the drive shaft 3, has made it possible to optimise the arrangement of the various components of the actuation motor 1.

The particular arrangement of the electronic control device 7 and the presence of the interconnection element 19 makes it possible, furthermore, to appreciably limit the overheating of the electronic control device 7 with consequent increase of the overall reliability of the actuation motor 1.

Lastly, by having a through drive shaft, it is possible to connect the pan and/or the spindle at the two different ends of the motor according to the constructive requirements.

This characteristic also makes available, simultaneously, two drive takeoffs (one for each end of the drive shaft) so as to be capable of optionally moving other accessory devices that are available in proximity to the actuation motor.

In practice the materials used, provided they are compatible with the specific use, as well as the dimensions and the shapes may be any according to requirements.

Moreover, all the details may be substituted by other, technically equivalent elements.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. An actuation motor (1), particularly for supporting pans or for winding spindles associated with a labeling machine, comprising a containment casing (2) which supports rotatably a drive shaft (3) that can rotate about its own axis (100) and can be connected to a supporting pan (11) or to a winding spindle (21) and can be anchored by way of means (30) for connection to a supporting structure (4) associated with said labeling machine, said containment casing (2) accommodating a stator (5), the respective rotor (6) and an electronic device (7) for controlling said actuation motor (1), said containment casing (2) forming an axial opening inside which said drive shaft (3) is supported rotatably, said axial opening passing longitudinally through a motor body (10), which accommodates said stator (5) and said rotor, and an accomodation body (9) for accommodating said electronic control device (7), wherein said accomodation body (9) comprises at the distal end of the containment casing (2) a bottom wall (9b), **characterized in that** said drive shaft (3) protrudes, with one of its ends (3b), from the bottom wall (9b) of said accommodation body (9).

2. The actuation motor (1) according to claim 1, **characterized in that** said drive shaft (3) comprises a hollow shaft (32).

3. The actuation motor (1) according to one or more of the preceding claims, **characterized in that** said supporting pan (11) comprises a pan body (12) that can be associated jointly with a shaft of the pan (13) that is keyed internally to said hollow shaft (32).

4. The actuation motor (1) according to claim 3, **characterized in that** said shaft of the pan (13) has an internal grooved cavity (13d) configured to engage slidingly, along a direction that is parallel to said axis of rotation (100), an elongated body (40), having
a first command end (41) and a second operative end (42).

5. The actuation motor (1) according to claim 4, **characterized in that** said elongated body (40) has an outer surface (40a) which is complementary to said internal grooved cavity (13d).

6. The actuation motor (1) according to one or more of the preceding claims, **characterized in that** said winding spindle (21) comprises a hollow actuation shaft (22), which can be connected, at a first end portion (22a), to an end (3b) of said hollow shaft (32), there being at least one rod (24) that passes through said hollow shaft (32) and said hollow actuation shaft (22) for kinematic connection between an actuation head (25) supported at the second end portion (22b) of said hollow actuation shaft (22) and movement means (26).

7. The actuation motor (1) according to one or more of the preceding claims, **characterized in that** it comprises means (18) for labyrinth-like mating between the end (3b) of said drive shaft (3) and the peripheral edge of the bottom wall (9b) of said accommodation body (9) that forms said through opening.

8. The actuation motor (1) according to claim 1, **characterized in that** it comprises means (31) for mutual interconnection between a first longitudinal end (9a) of said accommodation body (9) and a respective connecting end (10a) of said motor body (10) being provided.

9. The actuation motor (1) according to one or more of the preceding claims, **characterized in that** said electronic control device (7) is arranged around a first longitudinal portion (3a) of said drive shaft (3) which is arranged in a distal position with respect to said pan (11) or to said winding spindle (21).

10. The actuation motor (1) according to one or more of the preceding claims, **characterized in that** said electronic control device (7) comprises at least one electronic board (7a), which lies on a respective plane of arrangement that is substantially perpendicular to said rotation axis (100), said at least one electronic board (7a) having a respective passage (7b) that is adapted to form part of said axial opening designed to be crossed by said drive shaft (3).

11. The actuation motor (1) according to one or more of the preceding claims, **characterized in that** the transverse dimensions of said accommodation body (9) substantially correspond to the transverse dimensions of said motor body (10).

12. The actuation motor (1) according to one or more of the preceding claims, **characterized in that** it comprises, between said motor body (10) and said accommodation body (9), an interconnection element (19) that lies at right angles to the rotation axis (100) of said drive shaft (3).

13. The actuation motor (1) according to claim 12, **characterized in that** said interconnection element comprises a first plate-like element made of metallic material (19a), which is directed toward said motor body (10), and a second insulating element (19b), which is directed toward said accommodation body (9).

## Patentansprüche

1. Ein Betätigungsmotor (1), insbesondere für Stützwannen oder Wickelspindeln, die mit einer Etikettiermaschine verbunden sind, ein Einschlussgehäuse (2) umfassend, das drehbar eine Antriebswelle (3) trägt, die sich um ihre eigene Achse (100) drehen und mit einer Stützwanne (11) oder einer Wickelspindel (21) verbunden und durch Mittel (30) zur Verbindung mit einer tragenden Struktur (4), die mit der Etikettiermaschine verbunden ist, verankert werden kann, wobei das Einschlussgehäuse (2) einen Stator (5), den entsprechenden Rotor (6) und eine elektronische Vorrichtung (7) zur Steuerung des Betätigungsmotors (1) aufnimmt, wobei das Einschlussgehäuse (2) eine axiale Öffnung bildet, in welcher die Antriebswelle (3) drehbar getragen wird, wobei die axiale Öffnung in Längsrichtung durch einen Motorkörper (10) verläuft, der den Stator (5) und den Rotor aufnimmt, und einen Aufnahmekörper (9) zur Aufnahme der elektronischen Steuervorrichtung (7), wobei der Aufnahmekörper (9) am distalen Ende des Einschlussgehäuses (2) eine untere Wand (9b) umfasst, **dadurch gekennzeichnet, dass** die Antriebswelle (3) mit einer ihrer Enden (3b) aus der unteren Wand (9b) des Aufnahmekörpers (9) herausragt.

2. Der Betätigungsmotor (1) gemäß Anspruch 1, **dadurch gekennzeichnet, dass** die Antriebswelle (3) eine Hohlwelle (32) umfasst.

3. Der Betätigungsmotor (1) gemäß einem oder mehreren der obigen Ansprüche, **dadurch gekennzeichnet, dass** die Stützwanne (11) einen Wannenkörper (12) umfasst, der fest mit einem Schaft der Wanne (13) verbunden werden kann, welcher innen mit der Hohlwelle (32) verkeilt ist.

4. Der Betätigungsmotor (1) gemäß Anspruch 3, **dadurch gekennzeichnet, dass** der Schaft der Wanne (13) einen innen gerillten Hohlraum (13d) hat, ausgebildet, um verschiebbar, entlang einer Richtung, die parallel zu der Drehachse (100) ist, in einen verlängerten Körper (40) einzugreifen, der ein erstes Befehlsende (41) und ein zweites operatives Ende (42) hat.

5. Der Betätigungsmotor (1) gemäß Anspruch 4, **dadurch gekennzeichnet, dass** der verlängerte Körper (40) eine äußere Oberfläche (40a) hat, die komplementär zu dem innen gerillten Hohlraum (13d) ist.

6. Der Betätigungsmotor (1) gemäß einem oder mehreren der obigen Ansprüche, **dadurch gekennzeichnet, dass** die Wickelspindel (21) eine hohle Antriebswelle (22) umfasst, die an einem ersten Endabschnitt (22a) mit einem Ende (3b) der Hohlwelle (32) verbunden werden kann, wobei es mindestens einen Stab (24) gibt, der durch die Hohlwelle (32) und die hohle Antriebswelle (22) verläuft, zur kinematischen Verbindung zwischen einem Betätigungskopf (25), der am zweiten Endabschnitt (22b) der hohlen Antriebswelle (22) getragen wird, und Bewegungsmitteln (26).

7. Der Betätigungsmotor (1) gemäß einem oder mehreren der obigen Ansprüche, **dadurch gekennzeichnet, dass** er Mittel (18) zur labyrinthartigen Passung zwischen dem Ende (3b) der Antriebswelle (3) und der peripheren Kante der unteren Wand (9b) des Aufnahmekörpers (9) umfasst, der die Durchgangsöffnung bildet.

8. Der Betätigungsmotor (1) gemäß Anspruch 1, **dadurch gekennzeichnet, dass** er Mittel (31) zur Verbindung zwischen einem ersten Längsende (9a) des Aufnahmekörpers (9) und einem entsprechenden Verbindungsende (10a) des Motorkörpers (10), der bereitgestellt wird, umfasst.

9. Der Betätigungsmotor (1) gemäß einem oder mehreren der obigen Ansprüche, **dadurch gekennzeichnet, dass** die elektronische Steuervorrichtung (7) um einen ersten Längsabschnitt (3a) der Antriebswelle (3) herum angeordnet ist, der in einer distalen Position im Verhältnis zu der Wanne (11) oder zu der Wickelspindel (21) angeordnet ist.

10. Der Betätigungsmotor (1) gemäß einem oder mehreren der obigen Ansprüche, **dadurch gekennzeichnet, dass** die elektronische Steuervorrichtung (7) mindestens eine elektronische Tafel (7a) umfasst, die auf einer entsprechenden Anordnungsebene liegt,
welche im Wesentlichen senkrecht zu der Drehachse (100) ist, wobei die mindestens eine elektronische Tafel (7a) einen entsprechenden Durchgang (7b) hat, der ausgebildet ist, um Teil der axialen Öffnung zu bilden, die konstruiert ist, um von der Antriebswelle (3) durchquert zu werden.

11. Der Betätigungsmotor (1) gemäß einem oder mehreren der obigen Ansprüche, **dadurch gekennzeichnet, dass** die Quermaße des Aufnahmekörpers (9) im Wesentlichen den Quermaßen des Motorkörpers (10) entsprechen.

12. Der Betätigungsmotor (1) gemäß einem oder mehreren der obigen Ansprüche, **dadurch gekennzeichnet, dass** er, zwischen dem Motorkörper (10) und dem Aufnahmekörper (9), ein Verbindungselement (19) umfasst, das in rechten Winkeln zur Drehachse (100) der Antriebswelle (3) liegt.

13. Der Betätigungsmotor (1) gemäß Anspruch 12, **dadurch gekennzeichnet, dass** das Verbindungselement ein erstes plattenartiges Element aus Metallmaterial (19a) umfasst, das zu dem Motorkörper (10) hin gerichtet ist, und ein zweites Isolierelement (19b), das zu dem Aufnahmekörper (9) hin gerichtet ist.

## Revendications

1. Moteur d'actionnement (1), en particulier pour des cuvettes de support ou des broches à bobiner associées à une machine d'étiquetage, comprenant un boîtier de confinement (2) qui supporte en rotation un arbre d'entraînement (3) qui peut tourner autour de son propre axe (100) et qui peut être relié à une cuvette de support (11) ou à une broche à bobiner (21) et peut être ancré par l'intermédiaire de moyens (30) pour le raccordement à une structure de support (4) associée à ladite machine d'étiquetage, ledit boîtier de confinement contenant un stator (5), le rotor respectif (6) et un dispositif électronique (7) pour commander ledit moteur d'actionnement (1), ledit boîtier de confinement (2) formant une ouverture axiale à l'intérieur de laquelle ledit arbre d'entraînement (3) est supporté de manière rotative, ladite ouverture axiale passant longitudinalement à travers un corps de moteur (10), qui reçoit ledit stator (5) et ledit rotor, et un corps de logement (9) pour recevoir ledit dispositif de commande électronique (7), dans lequel ledit corps de logement (9) comporte au niveau de l'extrémité distale du boîtier de confinement (2) une paroi inférieure (9b), **caractérisé en ce que** ledit arbre d'entraînement (3) fait saillie, avec l'une de ses extrémités (3b), depuis la paroi inférieure (9b) dudit corps de logement (9).

2. Moteur d'actionnement (1) selon la revendication 1, **caractérisé en ce que** ledit arbre d'entraînement (3) comporte un arbre creux (32).

3. Moteur d'actionnement (1) selon l'une ou plusieurs des revendications précédentes, **caractérisé en ce que** ladite cuvette de support (11) comporte un corps de cuvette (12) qui peut être associé conjointement avec un arbre de la cuvette (13) qui est claveté intérieurement audit arbre creux (32).

4. Moteur d'actionnement (1) selon la revendication 3, **caractérisé en ce que** ledit arbre de la cuvette (13) a une cavité rainurée interne (13d) configurée pour mettre en prise par coulissement, le long d'une direction qui est parallèle audit axe de rotation (100), un corps allongé (40), ayant une première extrémité de commande (41) et une seconde extrémité opérationnelle (42).

5. Moteur d'actionnement (1) selon la revendication 4, **caractérisé en ce que** ledit corps allongé (40) a une surface externe (40a) qui est complémentaire à ladite cavité rainurée interne (13d).

6. Moteur d'actionnement (1) selon l'une ou plusieurs des revendications précédentes, **caractérisé en ce que** ladite broche à bobiner (21) comporte un arbre d'actionnement creux (22), lequel peut être relié, au niveau d'une première partie d'extrémité (22a), à une extrémité (3b) dudit arbre creux (32), au moins une tige (24) passant à travers ledit arbre creux (32) et ledit arbre d'actionnement creux (22) en vue d'une connexion cinématique entre une tête d'actionnement (25) supportée au niveau de la seconde partie d'extrémité (22b) dudit arbre d'actionnement creux (22) et des moyens de déplacement (26).

7. Moteur d'actionnement (1) selon l'une ou plusieurs des revendications précédentes, **caractérisé en ce qu'**il comporte des moyens (18) pour l'accouplement en forme de labyrinthe entre l'extrémité (3b) dudit arbre d'entraînement (3) et le bord périphérique de la paroi inférieure (9b) dudit corps de logement (9) qui forme ladite ouverture traversante.

8. Moteur d'actionnement (1) selon la revendication 1, **caractérisé en ce qu'**il comporte des moyens (31) en vue d'une interconnexion mutuelle entre une première extrémité longitudinale (9a) dudit corps de logement (9) et une extrémité de connexion respective (10a) dudit corps de moteur (10) étant prévue.

9. Moteur d'actionnement (1) selon l'une ou plusieurs des revendications précédentes, **caractérisé en ce que** ledit dispositif de commande électronique (7) est disposé autour d'une première partie longitudinale (3a) dudit arbre d'entraînement (3) qui est disposé dans une position distale par rapport à ladite cuvette (11) ou à ladite broche à bobiner (21).

10. Moteur d'actionnement (1) selon l'une ou plusieurs des revendications précédentes, **caractérisé en ce que** ledit dispositif de commande électronique (7) comporte au moins une carte électronique (7a), laquelle repose sur un plan respectif d'agencement qui est sensiblement perpendiculaire audit axe de rotation (100), ladite au moins une carte électronique (7a) ayant un passage respectif (7b) qui est adapté pour former une partie de ladite ouverture axiale conçue pour être traversée par ledit arbre d'entraînement (3).

11. Moteur d'actionnement (1) selon l'une ou plusieurs des revendications précédentes, **caractérisé en ce que** les dimensions transversales dudit corps de logement (9) correspondent sensiblement aux dimensions transversales dudit corps de moteur (10).

12. Moteur d'actionnement (1) selon l'une ou plusieurs des revendications précédentes, **caractérisé en ce qu'**il comporte, entre ledit corps de moteur (10) et ledit corps de logement (9), un élément d'interconnexion (19) qui repose à angles droits par rapport à l'axe de rotation (100) dudit arbre d'entraînement (3).

13. Moteur d'actionnement (1) selon la revendication 12, **caractérisé en ce que** ledit élément d'interconnexion comporte un premier élément de type plaque constitué d'un matériau métallique (19a), qui est dirigé vers ledit corps de moteur (10), et un second élément isolant (19b), qui est dirigé vers ledit corps de logement (9).
